# EUROPÄISCHE PATENTSCHRIFT

(11) **EP 1 119 507 B1**
(45) Veröffentlichungstag und Bekanntmachung des Hinweises auf die Patenterteilung: **26.03.2003**
(21) Anmeldenummer: 99947078.4
(22) Anmeldetag: 04.10.1999
(51) Int. Cl.: B65G 17/32, B65G 37/00, B65H 29/04

(54) **VORRICHTUNG ZUR ÜBERNAHME UND BEFÖRDERUNG VON GEGENSTÄNDEN**
DEVICE FOR RECEIVING AND TRANSPORTING OBJECTS
DISPOSITIF PERMETTANT DE RECEVOIR ET DE TRANSPORTER DES OBJETS

(30) Priorität: 05.10.1998 AT 165698
(43) Veröffentlichungstag der Anmeldung: 01.08.2001
(73) Patentinhaber: STARLINGER & CO. GESELLSCHAFT MBH, 1060 Wien (AT)
(72) Erfinder: STARLINGER HUEMER, Franz, A-1060 Wien (AT); APFLER, Gerhard, A-2763 Pernitz (AT)
(74) Vertreter: Margotti, Herwig Franz
(86) Internationale Anmeldenummer: AT9900234
(87) Internationale Veröffentlichungsnummer: WO00020304

(56) Entgegenhaltungen:
- DE-A- 3 012 677
- DE-A- 3 146 931
- DE-U- 8 604 603

## Beschreibung

Die Erfindung betrifft eine Vorrichtung zur Übernahme und Beförderung von Gegenständen, vorzugsweise von Gegenständen mit flacher Gestalt, wobei die Vorrichtung mindestens ein Paar synchron angetriebener, einander gegenüberliegender, paralleler Ketten oder Riemen aufweist, die zwischen einander einen Abstand zur Hindurchförderung der Gegenstände definieren, wobei jede Kette bzw. jeder Riemen mindestens einen Greifer aufweist und jeder Greifer einer Kette bzw. eines Riemens jeweils einem Greifer der anderen Kette bzw. des anderen Riemens gegenübersteht.

Aus der Druckschrift DE 30 38 425 A1 ist eine solche Vorrichtung zum Fördern von Gegenständen mit flacher Gestalt (Isolierglasscheiben) bekannt, bei welcher die Gegenstände über an Förderketten angeordnete Greifer gehalten und gefördert werden.

in der Druckschrift DE 31 46 931 A1 ist eine Vorrichtung zur Übernahme und Beförderung von Gegenständen gemäß dem Oberbegriff des Anspruchs 1 offenbart. Diese Vorrichtung dient dem Vorschub von Stabmaterial und weist ein Endlos-Zugorgan auf, das an seinem Umfang eine Vielzahl an Klemmen trägt, die von Führungsbahnen ausgelenkt werden und jeweils paarweise das Stabmaterial ergreifen, befördern und wieder freigeben. Die Auslenkung der Klemmen erfolgt durch verschiedene Neigungen der Führungsbahnen. Bei dieser Vorrichtung ist die Relativgeschwindigkeit zwischen Greifer und Stabmaterial zum Übernahmezeitpunkt nicht Null, wodurch nicht exakt gearbeitet werden kann und die Verarbeitungsgeschwindigkeiten nicht hoch sind.

In der industriellen Produktion ist man jedoch oft mit dem Problem konfrontiert, daß im Zuge eines automatischen Herstellungsvorgangs Gegenstände, die entlang einer Förderstrecke transportiert werden, angehalten werden müssen, um einem Bearbeitungsschritt unterzogen zu werden. Nachdem dieser Bearbeitungsschritt abgeschlossen ist, müssen die Gegenstände wieder in das Transportsystem übernommen und zur nächsten Bearbeitungsstation weiterbefördert werden.

Ein konkretes Beispiel des obigen Produktionsvorgangs findet sich bei der Herstellung von Säcken. Dabei werden schlauchförmige Materialbahnen kontinuierlich von einer Trommel in eine Sackherstellungsanlage eingefördert. Diese kontinuierliche Bewegung der Materialbahnen muß in eine intermittierende Bewegung umgewandelt werden, um Sackkörper geeigneter Länge abschneiden zu können. Die still liegenden Sackkörper werden dann zu weiteren Verarbeitungsstationen, wie einer Nähmaschine, einer Sackbodenfalt- und -verschließmaschine und einer Druckmaschine weiterbefördert. Im Laufe dieses Herstellungsvorgangs ist es immer wieder notwendig, den Sackkörper anzuhalten und wieder weiterzubefördern, wobei auch Umlenkungen erforderlich sein können.

Nach dem Stand der Technik sind im wesentlichen zwei Typen von Vorrichtungen bekannt, mit denen Gegenstände in ein Transportsystem übernommen und befördert werden können. Der erste Typus ist der des Förderbands mit diskontinuierlichem Betrieb. Dabei wird der zu befördernde Gegenstand bei Bandstillstand durch geeignete Mittel am Band festgeklemmt und das Band daraufhin beschleunigt. Im Fall der Sackherstellung wird der Sackkörper zweckmäßig durch Vakuum am Band befestigt.

Grundsätzlich nachteilig an diesem Typ ist der Stop-Go-Betrieb, der hohen Verschleiß der Bestandteile, hohen Energieverbrauch und damit einhergehend hohe Betriebskosten mit sich bringt. Eine solche Vorrichtung verlangt auch nach oftmaliger Wartung und arbeitet darüber hinaus ungenau, was im Fall der Sackherstellung zu hohen Ausschußraten führt, da eine exakte Positionierung der Sackkörper, z.B. an der Nähmaschine oder der Druckmaschine, unerläßlich ist.

Der zweite bekannte Typus einer Vorrichtung zur Übernahme und Beförderung von Gegenständen ist jener mit sich kontinuierlich bewegenden Armen, die mit Greifklauen den Gegenstand packen und vorzugsweise auf ein Förderband übergeben. Im Fall der Sackherstellung sind somit keine großen Massen zu bewegen, weshalb der Energieverbrauch der Vorrichtung niedriger ist. Es ist allerdings eine ausgeklügelte elektronische Steuerung notwendig, und durch die unvermeidlichen Bauteil- und Passungstoleranzen sowie Abnützungen muß diese Maschine relativ oft neu eingestellt werden. Die bei der Sackherstellung typischen Durchsätze von mehreren Dutzend Säcken pro Minute bedingen, daß die Greifklauen aufeinander abgestimmt innerhalb von Sekundenbruchteilen einen Sackkörper ergreifen müssen, was schwierig zu erreichen ist und somit oft zu dem Ergebnis führt, daß der Sackkörper schief in das Fördersystem gezogen wird, was wiederum hohe Ausschußraten nach sich zieht.

Somit wäre es wünschenswert, eine Vorrichtung zur Übernahme und Beförderung von Gegenständen, insbesondere solchen mit flacher Gestalt, wie z.B. Sackkörper, zur Verfügung stellen zu können, die robust ist, sehr exakt arbeitet, kaum Wartungs- und Nachstellarbeiten verlangt und darüber hinaus hohe Verarbeitungsgeschwindigkeiten zuläßt.

Diese Aufgabe wird durch eine Vorrichtung mit den kennzeichenden Merkmalen des Anspruchs 1 gelöst.

Diese erfindungsgemäße Vorrichtung ist sehr robust, da sie keine Teile enthält, die komplizierte Einstellarbeiten verlangen, oder im Betrieb dazu neigen, sich zu verstellen. Die Kulissen können aus massiven Metallplatten ausgeführt sein, so daß ein Verschleiß der Führungsbahnen durch die Gleitbewegung der Fortsätze der Greifer vernachlässigbar ist. Da die Kulissen an der Vorrichtung fix montiert sind, bleibt die Lage der Führungsbahnen stets gleich. Um Gegenstände anderer Größe zu befördern, werden die Kulissen einfach ausgetauscht. Somit kann die Vorrichtung auch von wenig geschulten Hilfskräften bedient werden, wodurch die Betriebskosten stark gesenkt werden. Die von den Greifern ausgeführte Rotationsbewegung hat gegenüber einer zum zu ergreifenden Gegenstand hin gerichteten Translationsbewegung den großen Vorteil, daß in Transportrichtung gesehen die Relativbewegung zwischen dem Angriffsende der Greifer und dem Gegenstand zum Zeitpunkt der Übernahme stark verlangsamt ist, wodurch auch bei hohen Transportgeschwindigkeiten das synchrone Zupacken der Greifer gesichert ist. Dieser Effekt kann günstigerweise noch verstärkt werden, indem der geneigte Bahnabschnitt der Führungsbahn jeder Kulisse an der Übernahmestelle gekrümmt ist. Dadurch ist der Anteil der dem Angriffsende der Greifer verliehenen Kreisgeschwindigkeit, der entgegen der Transportgeschwindigkeit der Gegenstände gerichtet ist, nicht konstant, sondern unterliegt einer Beschleunigung, wodurch die Relativbewegung zwischen Greiferangriffsende und Gegenstand zum Übernahmezeitpunkt gegen null geht.

Um über den gesamten Förderweg der Gegenstände eine gleichmäßige Angriffskraft der Greifer zu gewährleisten, soll die Führungsbahn der jeweiligen Kulisse nach der Übernahmestelle parallel zur Förderrichtung der Gegenstände verlaufen.

Die Führungsbahn der jeweiligen Kulisse weist zweckmäßig an einer Abgabestelle der Gegenstände einen zur Neigung der Führungsbahn an der Übernahmestelle entgegengesetzt geneigten, vorzugsweise gekrümmten, Bahnabschnitt auf.

In einer Ausgestaltung der Erfindung sind die Greifer in Lagerschuhen an der Kette bzw. dem Riemen montiert.

Um zu erreichen, daß der von den Greifern an der Übernahmestelle zum Erfassen der Gegenstände zurückzulegende Weg minimal wird, kann die Führungsbahn jeder Kulisse in einem Einlaufabschnitt vor der Übernahmestelle in einem Abstand zur Kette bzw. zum Riemen verlaufen, in dem der jeweilige Greifer durch seinen Fortsatz nahe hin zum Gegenstand vorausgelenkt ist.

Zweckmäßig sind die Greifer durch Federmittel zu einer Ruhelage hin vorgespannt, in der sich ein Angriffsende des Greifers im Abstand von dem zu übernehmenden Gegenstand befindet.

Eine günstige Ausgestaltung der Erfindung ist dadurch gekennzeichnet, daß der Fortsatz jedes Greifer zwischen zwei einander gegenüberliegenden, vorzugsweise etwa parallelen, Führungsbahnen entlang bewegbar ist. Dadurch ist der Greifer sowohl hin zum Gegenstand als auch von ihm weg auslenkbar, wobei die auf den Greifer ausgeübten Auslenkkräfte wesentlich größer sind als die durch Federmittel bewirkten Rückstellkräfte, wobei Federmittel allerdings zusätzlich eingesetzt werden können, um die Greifer außerhalb der Führungsbahnen, d.h. beim Kettenrücklauf, in eine definierte Lage vorzuspannen.

Zum besseren Erfassen der Gegenstände weisen die Greifer günstigerweise Angriffsbacken aus einem Elastomermaterial auf.

Um die Reibung zwischen dem Fortsatz zur Auslenkung des Greifers und der Kulissen-Führungsbahn zu minimieren, kann der Fortsatz mit einer frei drehbaren Rolle versehen sein.

Zur Erzielung einer gewünschten Hebelwirkung wird der Fortsatz zur Auslenkung des Greifers an einem auskragenden Arm des Greifers angeordnet.

Um zu verhindern, daß sich die Kette bzw. der Riemen entlang der Förderstrecke der Gegenstände durchbiegt und so zu reduzierter Angriffskraft der Greifer führt, kann nahe der Kette bzw. dem Riemen eine Stützvorrichtung vorgesehen sein, an der die Kette oder der Riemen bzw. der Lagerschuh der Greifer aufliegen kann.

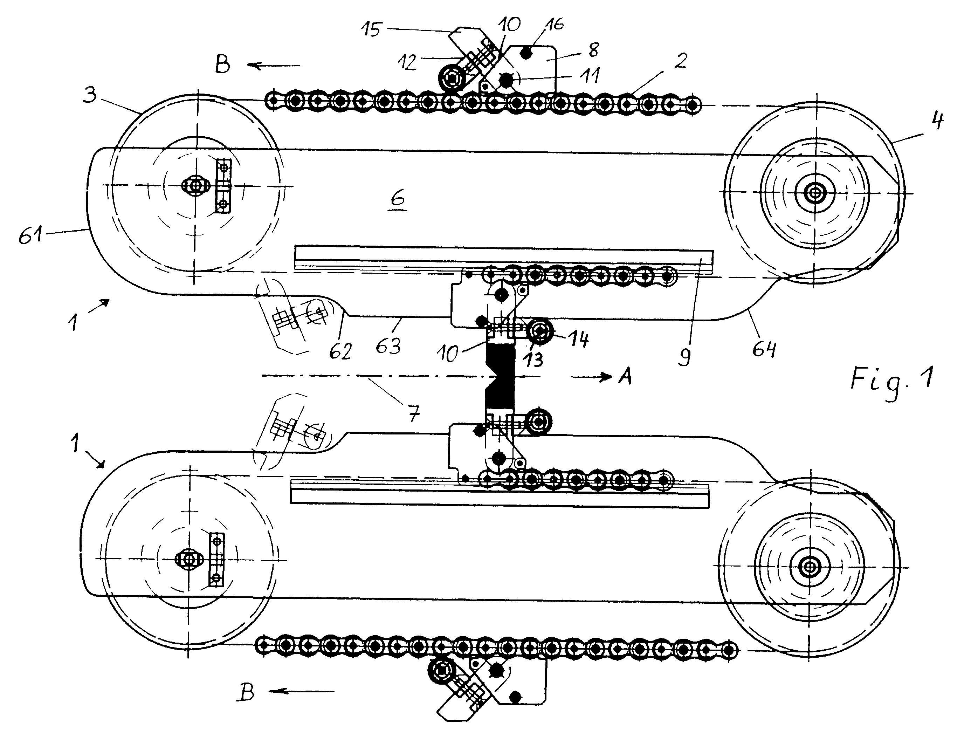

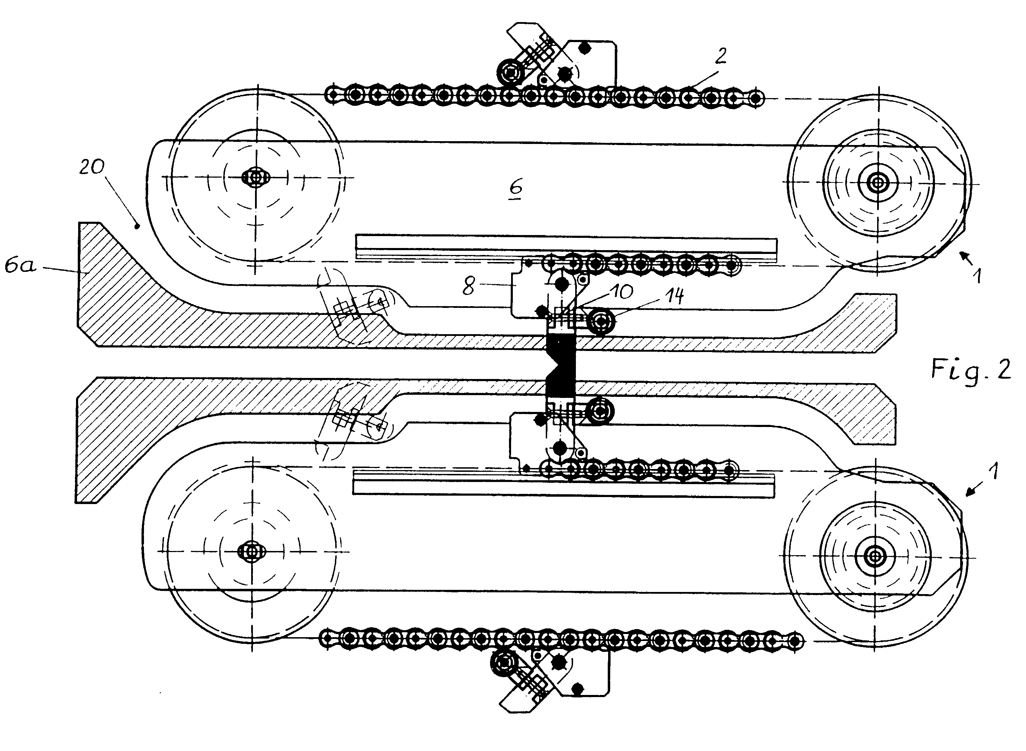

Die Erfindung wird nun beispielhaft unter Heranziehung der beiliegenden Zeichnungen näher erläutert. Fig.1 zeigt eine erste Ausführungsform einer erfindungsgemäßen Vorrichtung schematisch in Seitenansicht, und Fig.2 zeigt eine zweite Ausführungsform der erfindungsgemäßen Vorrichtung schematisch in Seitenansicht.

In Fig.1 ist eine erfindungsgemäße Vorrichtung zur Übernahme und Beförderung von Gegenständen schematisch in Seitenansicht dargestellt. Sie besteht aus zwei spiegelbildlich angeordneten Systemen 1,1 umlaufender und synchron in entgegengesetzter Drehrichtung (siehe Pfeile B) angetriebener Ketten. Da die beiden Systeme spiegelsymmetrisch sind, kann die Beschreibung und Bezeichnung mittels Bezugszeichen auf ein System beschränkt werden und hat sinngemäß auch für das zweite System Gültigkeit.

An einem nicht dargestellten Maschinenkörper sind zwei Zahnräder 3,4 drehbar gelagert, von denen mindestens eines durch einen nicht dargestellten Antrieb gedreht wird. Über die Zahnräder läuft eine Kette 2 in der durch Pfeil B gezeigten Richtung um. An der Kette 2 sind im gleichen Abstand zueinander zwei Greifer 10 schwenkbar montiert. Die Befestigung jedes Greifers an der Kette erfolgt jeweils durch einen Lagerschuh 8, der fix an der Kette montiert ist und der eine quer zur Kettenlängserstreckung liegende Schwenkachse 11 aufweist, an der der Greifer 10 schwenkbar montiert ist. Die Drehbewegung des Greifers wird an einer Seite durch einen Stift 16 begrenzt. Durch eine nicht dargestellte Feder kann der Greifer in eine vordefinierte Ruhelage vorgespannt werden. An seinem freien, dem Schwenkachsenlager gegenüberliegenden, Angriffsende weist jeder Greifer eine Angriffsbacke 15 aus geeignetem Material, insbesondere einem Elastomermaterial, auf. Von der Schwenkachse beabstandet erstreckt sich aus dem Greifer etwa im rechten Winkel zur Längsrichtung des Greifers 10 ein Arm 12, der wiederum einen quer zur Bewegungsrichtung B der Kette verlaufenden Fortsatz 13 aufweist. In der Darstellung von Fig.1 erstreckt sich dieser Fortsatz 13 aus der Zeichnungsebene heraus. Der Fortsatz 13 ist als Drehachse ausgebildet und mit einer drehbaren Rolle 14 versehen.

Die beiden Systeme 1,1 sind einander gegenüberliegend und in einem Abstand voneinander angeordnet, so daß zwischen ihnen ein Gegenstand, im dargestellten Fall ein Sackkörper 7, in Richtung des Pfeils A hindurchbefördert werden kann. Dazu muß der Sackkörper an einer Übernahmestelle jeweils von einem Greifer jedes Systems gepackt, dann entlang einer Förderstrecke festgehalten und weitergezogen werden, um schließlich an einer Abgabestelle von den Greifern losgelassen zu werden. Dazu ist am nicht dargestellten Maschinenkörper für jedes System 1,1 eine Kulisse 6 montiert, deren dem jeweils gegenüberliegenden System 1 zugewandte Seitenkante eine Führungsbahn bietet, auf der die Rolle 14 des Fortsatzes 13 jedes Greifers 10 während ihrer Bewegung in Förderrichtung (Pfeil A) aufliegt und, angetrieben von der Kette 2, in einseitig zwangsweise geführter Bewegung entlangbewegt wird. Die Führungsbahn der Kulisse 6 besteht aus einem Einlaufabschnitt 61, in dem die Rolle 14 eines Greifers 10, wenn er seine Rücklaufbewegung vom Zahnrad 4 zum Zahnrad 3 beendet hat und in eine Vorwärtsbewegung übergeht, auf der Führungsbahn aufsetzt und in bezug auf die Kette in einer Bogenbewegung vorausgelenkt wird. Die Bogenbewegung der Rolle 14 in bezug auf die Kette 2 kommt dadurch zustande, daß der mit der Rolle 14 über den Hebelarm 12 verbundene Greifer 10 bei Auslenken der Rolle um seine Schwenkachse 11 gedreht wird, wodurch der Greifer von seiner Ruhestellung aus in eine Stellung gebracht wird, in der er vom anschließend zu übernehmenden Sackkörper 7 nur mehr geringen Normalabstand aufweist. Der Einlaufabschnitt 61 geht an der definierten Übernahmestelle der Sackkörper 7 in einen von der Kette weg gekrümmten Abschnitt 62 über. Diese Krümmung der Führungsbahn bewirkt für eine sich über diesen Abschnitt bewegende Rolle 14 eines Greifers eine sich beschleunigende Kreisbewegung der Rolle 14 und somit auch des zugeordneten Greifers 10 und insbesondere seiner Angriffsbacke 15, wobei die Kreisbewegung der Translationsbewegung (Pfeil A) der Kette 2 entgegengesetzt ist. Dieser Zustand eines sich gerade im Abschnitt 62 der Führungsbahn befindlicher Greifers ist in der Zeichnung in Phantomlinien dargestellt. Man erkennt durch Vergleich mit einem Greifer in Ruhestellung, daß er in der Darstellung bereits aus seiner Ruhestellung entgegen der Translationsbewegung hin zum zu übernehmenden Sackkörper 7 gedreht wurde. Die Krümmung der Führungsbahn der Kulisse ist so bemessen, daß im Moment der Berührung zwischen dem still liegenden Sackkörper 7 und der Angriffsbacke 15 des Greifers die Translationsbewegung und die entgegengesetzte Kreisbewegung der Angriffsbacke einander im wesentlich aufheben und somit zwischen Sackkörper und Angriffsbacke praktisch keine Relativbewegung besteht. Erst nachdem der Sackkörper vom Greifer fest gepackt wurde, geht die Rolle 14 des Greifers in einen geraden Abschnitt 63 der Führungsbahn über, der einen konstanten Abstand zur Kette 2 aufweist, wodurch der Greifer keiner Rotationsbewegung mehr unterliegt und somit die Translationsbewegung der Kette 2 wieder auf den Greifer und folglich auch auf den zwischen gegenüberliegenden Greifern festgeklemmten Sackkörper wirkt.

Wie oben erwähnt, wird der Gegenstand, d.h. der Sackkörper 7, zwischen Greifern gegenüberliegender Systeme 1,1 festgeklemmt. Da sich die Ketten beider Systeme mit derselben Geschwindigkeit bewegen und die Greifer an den Ketten so angeordnet sind, daß einem jeweiligen Greifer eines Systems jeweils ein Greifer des anderen Systems gegenübersteht und außerdem die Führungsbahnen der Kulissen spiegelbildlich zueinander verlaufen, ist sichergestellt, daß der Gegenstand gleichzeitig von Greifern an gegenüberliegenden Seiten gepackt und mitgezogen wird. Synchronisierungsprobleme wie beim Stand der Technik treten bei der erfindungsgemäßen Ausführungsform nicht auf, und es sind auch keine Nachjustierungen an den Systemen erforderlich.

Abhängig von der Größe des zu transportierenden Gegenstandes und seiner Beschaffenheit kann es angebracht sein, ihn zwischen mehreren Greiferpaaren festzuhalten. Dazu werden mehrere gleiche Systempaare 1,1 parallel nebeneinander angeordnet und ihre Greiferpositionen in Übereinklang gebracht. Im in Fig.1 dargestellten Beispiel der Beförderung von Sackkörpern werden üblicherweise zwei Systempaare verwendet, so daß jeder Sackkörper gleichzeitig an zwei Stellen gepackt wird. In der Zeichnung ist allerdings nur das vordere Systempaar 1,1 zu sehen, da das zweite aus Sicht des Betrachters genau dahinterliegt. Da die Relativgeschwindigkeit zwischen Greifer und Gegenstand zum Übernahmezeitpunkt praktisch Null ist, ist es bei schweren Gegenständen auch denkbar, den Gegenstand nicht nur am vorderen Ende zu packen, sondern zusätzlich auch an seinem hinteren Ende. Dazu muß nur der Abstand zwischen den Greifern auf einer Kette so eingestellt werden, daß er geringer als die Länge des Gegenstandes ist.

Nach der Übernahme wird der Sackkörper mit der durch die Kettengeschwindigkeit vorgegebenen Geschwindigkeit befördert, solange sich der Greifer im Abschnitt 63 der Führungsbahn befindet. Um zu verhindern, daß die unvermeidliche Durchbiegung der Kette 2 zwischen den Zahnrädern 3,4 ein Nachlassen der Klemmkraft der Greifer bewirkt, ist nahe der Kette ein parallel zu ihr laufender Stützbalken 9 mit reibungsarmer Oberfläche vorgesehen, auf dem der Lagerschuh 8 während des Sackkörpertransports aufruhen kann.

An der definierten Abgabestelle für die Sackkörper weist die Führungsbahn der Kulisse 6 wiederum einen gekrümmten Abschnitt 64 auf, der nun jedoch hin zur Kette geneigt ist, weshalb von der Kulisse auf die Rolle 14 des Greifers 10 keine Kraft mehr ausgeübt wird, die den Greifer gegen den Sackkörper pressen würde. Vielmehr wird der Greifer durch die Rückstellkraft einer Feder im Lagerschuh 8 in seine Ruhelage gedrängt und der Sackkörper losgelassen. Der Sackkörper liegt nunmehr bewegungslos und kann einem weiteren Bearbeitungsschritt unterzogen werden.

In Fig.2 ist eine Variante zur ersten Ausführungsform der erfindungsgemäßen Vorrichtung dargestellt, die sich von der in Fig.1 dargestellten Ausführungsform nur insofern unterscheidet, als für jedes System 1,1 neben der Kulisse 6 eine weitere Kulisse 6a verwendet wird, deren eine Führungsbahn bildende Seitenkante der von der Kulisse 6 gebildeten Führungsbahn zugewandt ist. Die Führungsbahnen beider Kulissen laufen etwa parallel zueinander in einem Abstand, der etwas größer ist als der Durchmesser der Rolle 14 des Greifers 10, und bilden einen Kanal 20, durch den sich die Rolle 14 in zweiseitig geführter Bewegung entlang bewegt. Anders gesagt, wird bei der Bewegung des Greifers mit der Kette 2 über die Sackkörper-Förderstrecke die dem Greifer zugeordnete Rolle 14 zwangsweise im Kanal geführt, wobei sie zusätzlich zur durch die Kette bewirkten Translationsbewegung eine Schwenkbewegung weg von der Kette oder hin zu ihr durchführt, die vom Verlauf des Kanals 20 abhängt. Bei dieser Ausführungsform ist keine Feder im Lagerschuh erforderlich, um den Greifer an der Abgabestelle zum Loslassen des Sackkörpers zu veranlassen, sondern diese Funktion wird von der Kulisse 6a erfüllt. Eine Feder im Lagerschuh 8 kann aber trotzdem zweckmäßig sein, um den Greifer während seines Rücklaufs zur Übernahmestelle in eine Ruheposition vorzuspannen, wobei die Feder dann wesentlich kleiner als in der ersten Ausführungsform dimensioniert werden kann. Alternativ dazu kann der Greifer während des Rücklaufs des Greifers ebenfalls mittels einer Kulisse in einer definierten Ruhelage gehalten werden.

## Patentansprüche

1. Vorrichtung zur Übernahme und Beförderung von Gegenständen (7), vorzugsweise von Gegenständen mit flacher Gestalt, wobei die Vorrichtung mindestens ein Paar synchron angetriebener, einander gegenüberliegender, paralleler Ketten (2) oder Riemen aufweist, die zwischen einander einen Abstand zur Hindurchförderung der Gegenstände definieren, wobei jede Kette bzw. jeder Riemen mindestens einen Greifer (10) aufweist und jeder Greifer (10) einer Kette bzw. eines Riemens jeweils einem Greifer der anderen Kette bzw. des anderen Riemens gegenübersteht und die einander gegenüberstehenden Greifer durch gleichzeitiges Auslenken aufeinander zu bewegbar sind und dadurch den Gegenstand übernehmen und befördern können, indem jeder Greifer (10) an seiner Kette bzw. seinem Riemen um eine quer zur Ketten- bzw. Riemenlaufrichtung verlaufende Schwenkachse (11) schwenkbar montiert ist, wobei jeder Greifer einen von der Schwenkachse (11) beabstandeten Fortsatz (13) aufweist, der entlang einer Führungsbahn (61,62,63,64) einer Kulisse (6) bewegbar ist, wobei jeder Kette (2) bzw. jedem Riemen eine Führungsbahn zugeordnet ist, und wobei die jeweilige Führungsbahn an der Übernahmestelle der Gegenstände einen bezüglich der Förderrichtung der Gegenstände (7) geneigten Bahnabschnitt (62) aufweist, so daß bei laufender Kette bzw. laufendem Riemen der Fortsatz (13) des Greifers (10) entlang des geneigten Bahnabschnitts (62) ausgelenkt und damit dem Greifer eine Rotationsbewegung verliehen wird, die der durch die Kette bzw. den Riemen bewirkten Translationsbewegung (Pfeil A) entgegengesetzt ist, **dadurch gekennzeichnet, daß** der geneigte Bahnabschnitt (62) der Führungsbahn der Kulisse (6) an der Übernahmestelle solcherart gekrümmt ist, daß im Moment der Berührung zwischen dem still stehenden Gegenstand (7) und dem Angriffsende des Greifers (10) die Translationsbewegung und die entgegengesetzte Rotationsbewegung des Greifers einander im wesentlichen aufheben.

2. Vorrichtung nach Anspruch 1, **dadurch gekennzeichnet, daß** der Führungsbahnabschnitt (63) der jeweiligen Kulisse (6) nach der Übernahmestelle parallel zur Förderrichtung (Pfeil A) der Gegenstände (7) verläuft.

3. Vorrichtung nach Anspruch 1 oder 2, **dadurch gekennzeichnet, daß** die Führungsbahn der jeweiligen Kulisse (6) an einer Abgabestelle der Gegenstände (7) einen zur Neigung des Führungsbahnabschnitts (62) an der Übernahmestelle entgegengesetzt geneigten, vorzugsweise gekrümmten, Bahnabschnitt (64) aufweist.

4. Vorrichtung nach einem der Ansprüche 1 bis 3, **dadurch gekennzeichnet, daß** die Greifer (10) in Lagerschuhen (8) an der Kette (2) bzw. dem Riemen schwenkbar gelagert sind.

5. Vorrichtung nach einem der Ansprüche 1 bis 4, **dadurch gekennzeichnet, daß** die Führungsbahn der Kulisse (6) vor der Übernahmestelle der Gegenstände (7) einen in einem Abstand zur Kette (2) bzw. zum Riemen verlaufenden Einlaufabschnitt (61) aufweist, in dem der jeweilige Greifer (10) durch seinen Fortsatz (13) nahe hin zum Gegenstand (7) vorausgelenkt ist.

6. Vorrichtung nach einem der Ansprüche 1 bis 5, **dadurch gekennzeichnet, daß** jeder Greifer (10) durch Federmittel zu einer Ruhelage hin vorgespannt ist, in der sich ein Angriffsende des Greifers (10) im Abstand von dem zu übernehmenden Gegenstand (7) befindet.

7. Vorrichtung nach einem der Ansprüche 1 bis 6, **dadurch gekennzeichnet, daß** der Fortsatz (13) jedes Greifer (10) zwischen zwei einander gegenüberliegenden, vorzugsweise etwa parallelen, Führungsbahnen von Kulissen (6,6a) entlang bewegbar ist.

8. Vorrichtung nach einem der Ansprüche 1 bis 7, **dadurch gekennzeichnet, daß** die Greifer (10) Angriffsbacken (15) aus einem Elastomermaterial aufweisen.

9. Vorrichtung nach einem der Ansprüche 1 bis 8, **dadurch gekennzeichnet, daß** der Fortsatz (13) zur Auslenkung des Greifers (10) mit einer frei drehbaren Rolle (14) versehen ist.

10. Vorrichtung nach einem der Ansprüche 1 bis 9, **dadurch gekennzeichnet, daß** der Fortsatz (13) zur Auslenkung des Greifers (10) an einem auskragenden Arm (12) des Greifers (10) angeordnet ist.

11. Vorrichtung nach einem der Ansprüche 1 bis 10, **dadurch gekennzeichnet, daß** entlang der Förderstrecke der Gegenstände (7) nahe der Kette (2) bzw. des Riemens eine Stützvorrichtung (9) zur Verhinderung von Durchbiegung der Kette (2) bzw. des Riemens weg vom Gegenstand (7) vorgesehen ist.

## Claims

1. A device for receiving and transporting objects (7), preferably objects of flat shape, the device having at least one pair of parallel chains (2) or belts situated opposite each other and driven in synchrony, which define a space between each other for transporting the objects therethrough, each chain or belt having at least one gripper (10) and each gripper (10) of a chain or belt facing a gripper of the other chain or belt and the opposing grippers being movable toward each other by simultaneous deflections, thereby being able to receive and transport the object, each gripper (10) being mounted on its chain or belt so as to be pivotable about a pivot axis (11) oriented transversely to the direction of movement of the chain or belt, each gripper having an extension (13) in spaced relationship to the pivot axis (11), which extension may be moved along a guiding path (61, 62, 63, 64) of a guiding plate (6), each chain (2) or belt being associated with a guiding path, and the respective guiding path having a path section (62) sloped with respect to the conveying direction of the objects (7) at the point where the objects are received, so that, when the chain or belt is moving, the extension (13) of the gripper (10) is deflected along the sloped path section (62) and thus the gripper is imparted a rotational movement which counteracts the translation movement (arrow A) caused by the chain or belt, **characterised in that** the sloped path section (62) of the guiding path of the guiding plate (6) is curved at the point of receipt in such a manner that at the moment of contact between the stagnant object (7) and the engagement end of the gripper (10) the translation movement and the opposing rotational movement of the gripper essentially counterbalance each other.

2. The device according to claim 1, **characterised in that** the guiding path section (63) of the respective guiding plate (6) runs in parallel to the conveying direction (arrow A) of the objects (7) after the point of receipt.

3. The device according to claim 1 or 2, **characterised in that**, at a point where the objects (7) are discharged, the guiding path of the respective guiding plate (6) has a path section (64) sloped in opposite direction to the inclination of the guiding path section (62) at the point of receipt and preferably being curved.

4. The device according to any of claims 1 to 3, **characterised in that** the grippers (10) are pivotably mounted in bearing shoes (8) on the chain (2) or belt.

5. The device according to any of claims 1 to 4, **characterised in that** the guiding path of the guiding plate (6) has a feeding zone (61) which runs at a distance to the chain (2) or belt upstream of the point of receipt of the objects (7), where the respective gripper (10) is pre-deflected close to the object (7) by its extension (13).

6. The device according to any of claims 1 to 5, **characterised in that** each gripper (10) is biased towards a rest position by spring means, where an engagement end of the gripper (10) is at a distance from the object (7) to be received.

7. The device according to any of claims 1 to 6, **characterised in that** the extension (13) of each gripper (10) may be moved along between two preferably about parallel guiding paths of guiding plates (6, 6a) facing each other.

8. The device according to any of claims 1 to 7, **characterised in that** the grippers (10) have engagement jaws (15) of elastomeric material.

9. The device according to any of claims 1 to 8, **characterised in that** the extension (13) for deflecting the gripper (10) is provided with a freely rotatable roller (14).

10. The device according to any of claims 1 to 9, **characterised in that** the extension (13) for deflecting the gripper (10) is arranged on a cantilevered arm (12) of the gripper (10).

11. The device according to any of claims 1 to 10, **characterised in that** a support structure (9) for preventing the chain (2) or belt from sagging away from the object (7) is provided close to the chain (2) or belt along the conveying distance of the objects (7).

## Revendications

1. Appareil pour reprendre et convoyer des objets (7), de préférence des objets de forme plate, l'appareil comprenant au moins une paire de chaînes (2) ou de courroies entraînées de façon synchrone, opposées et parallèles l'une à l'autre, qui définissent entre elles un intervalle pour faire passer les objets, dans lequel chaque chaîne ou chaque courroie comprend au moins un preneur (10) et chaque preneur (10) d'une chaîne ou d'une courroie est situé à l'opposé d'un preneur respectif de l'autre chaîne ou de l'autre courroie, et les preneurs mutuellement opposés peuvent être déplacés l'un vers l'autre par déviation simultanée et peuvent ainsi reprendre et convoyer l'objet du fait que chaque preneur (10) est monté mobile en pivotement, sur sa chaîne ou sur sa courroie, autour d'un axe de pivotement (11) perpendiculaire à la direction de circulation de chaîne ou de courroie, chaque preneur comprend un prolongement (13) écarté de l'axe de pivotement (11) et mobile le long d'une trajectoire de guidage (61, 62, 63, 64) d'une coulisse, une trajectoire de guidage est associée à chaque chaîne (2) ou à chaque courroie, et la trajectoire de guidage respective comprend, au niveau de l'emplacement de reprise des objets, un tronçon (62) incliné par rapport à la direction de convoyage des objets (7), de sorte que lors d'une circulation de la chaîne ou de la courroie, le prolongement (13) du preneur (10) est dévié le long du tronçon de trajectoire incliné (62) et un mouvement de rotation est conféré au preneur qui s'oppose au mouvement de translation (flèche A) provoqué par la chaîne ou par la courroie, **caractérisé en ce que** le tronçon incliné (62) de la trajectoire de guidage de la coulisse (6) est recourbé à l'emplacement de reprise, de telle sorte qu'à l'instant de la venue en contact entre l'objet stationnaire (7) et l'extrémité d'attaque du preneur (10), le mouvement de translation et le mouvement de rotation opposé du preneur s'annulent essentiellement entre eux.

2. Appareil selon la revendication 1, **caractérisé en ce qu'**après l'emplacement de reprise, le tronçon de trajectoire (63) de la coulisse respective (6) s'étend parallèlement à la direction de convoyage (flèche A) des objets (7).

3. Appareil selon l'une ou l'autre des revendications 1 et 2, **caractérisé en ce que** la trajectoire de la coulisse respective (6) présente, à un emplacement de remise des objets (7), un tronçon de trajectoire (64) incliné en sens opposé à l'inclinaison du tronçon de trajectoire (62), de préférence recourbé, à l'emplacement de reprise.

4. Appareil selon l'une des revendications 1 à 3, **caractérisé en ce que** les preneurs (10) sont montés mobiles en pivotement dans des sabots de montage (8) sur la chaîne (2) ou sur la courroie.

5. Appareil selon l'une des revendications 1 à 4, **caractérisé en ce qu'**en avant de l'emplacement de reprise des objets (7), la trajectoire de guidage de la coulisse (6) comprend un tronçon d'entrée (61) s'étendant à distance de la chaîne (2) ou de la courroie, dans lequel le preneur respectif (10) est dévié préalablement par son prolongement (13) à proximité vers l'objet (7).

6. Appareil selon l'une des revendications 1 à 5, **caractérisé en ce que** chaque preneur (10) est précontraint par des moyens élastiques dans une position de repos dans laquelle une extrémité d'attaque du preneur (10) se trouve à distance de l'objet (7) à reprendre.

7. Appareil selon l'une des revendications 1 à 6, **caractérisé en ce que** le prolongement (13) de chaque preneur (10) est mobile entre deux trajectoires de guidage de coulisses (6, 6a) mutuellement opposées, de préférence approximativement parallèles.

8. Appareil selon l'une des revendications 1 à 7, **caractérisé en ce que** les preneurs (10) comprennent des mâchoires d'attaque (15) en matière élastomère.

9. Appareil selon l'une des revendications 1 à 8, **caractérisé en ce que** le prolongement (13) pour faire dévier le preneur (10) est pourvu d'un galet (14) librement mobile en rotation.

10. Appareil selon l'une des revendications 1 à 9, **caractérisé en ce que** le prolongement (13) pour faire dévier le preneur (10) est agencé sur un bras (12) en porte-à-faux du preneur (10).

11. Appareil selon l'une des revendications 1 à 10, **caractérisé en ce qu'**il est prévu, suivant le trajet de convoyage des objets (7) à proximité de la chaîne (2) ou de la courroie, un dispositif d'appui pour empêcher un fléchissement de la chaîne (2) ou de la courroie en éloignement de l'objet (7).
